# EUROPEAN PATENT APPLICATION

(11) **EP 3 670 049 A1**
(43) Date of publication of application: **24.06.2020**
(21) Application number: 19214522.5
(22) Date of filing: 09.12.2019
(51) Int. Cl.: B23D 15/02, B23D 15/14, B23D 21/00, B23D 25/04, B21C 37/08, B23K 26/38, B23K 31/02, B23D 31/00

(54) **WELD BEAD CUTTING DEVICE**

(30) Priority: 21.12.2018 IT 201800020845
(71) Applicant: FIVES OTO S.P.A., 42022 Boretto, Reggio Emilia (IT)
(72) Inventor: MICALI, Luciano, 23824 DERVIO (LECCO) (IT)
(74) Representative: Casadei, Giovanni

(57) **Abstract**

A cutting-off device, comprising:
- a pair of blades (6), mobile on a cutting plane substantially vertical between a cutting position, in which they overlap partially in projection a vertical plane, and an inactive position, in which they are distanced from one another;
- two actuators (7), each of which is associated with a blade (6);
- a synchronizer, provided to produce a synchronized movement of the blades (6) such for which the blades (6) simultaneously reach the cutting position in a predefined position.

## Description

The present invention relates to a weld bead cutting-off device.

The device in question is particularly useful in a shearing machine, in particular a machine intended for shearing a continuous pipe into lengths of pipe, wherein the continuous pipe is made by the longitudinal welding of a bent metal sheet.

In the sector of the production of pipes welded through longitudinal welding, the formation of an internal weld bead is known, which extends inside the pipe. The internal bead is formed in the longitudinal direction because of the welding pressures that push the material to extend towards the inside of the pipe during the welding of the edges of the starting sheet. Such internal bead is removed with a process known as "detachment".

Detachment substantially consists of removing the material that forms the internal bead. Detachment separates a continuous longitudinal bead with an irregular section from the pipe, such bead, due to rapid cooling, being thermally tempered and therefore particularly hard.

Detachment, i.e. the removal of the internal bead, takes place immediately downstream of the longitudinal welding of the continuous pipe and forms a continuous bead which is trapped inside the pipe, also subsequent to cutting of said pipe. Cutting of the continuous pipe is, in fact, realized with special cutting-off machines (for example, orbital cutting machines), the cutting tools of which remain on the periphery of the pipe and do not damage the continuous internal bead.

The aforementioned internal bead, which is continuous, does not allow correct offloading of the cut pipes, so it must be cut off.

In the prior art, it is known to provide a device for cutting off the internal bead downstream of the cutting-off machine (i.e. the machine adapted to cut the continuous welded pipe into lengths of pipe) and therefore operates after the single pipes have already been released by the cutting-off machine

. This is achieved by accelerating the pipe just cut-off (which travels on a bed of motorized rollers), distancing it from the remaining part of the continuous pipe, and therefore from the cutting-off machine, so as to leave exposed a section of the aforementioned continuous internal bead.

Once the cut-off pipe has been distanced from the cutting-off machine and a section of the continuous internal bead is therefore exposed, a cutting blade is activated which cuts the bead.

The functioning and safety of the system are guaranteed by the presence of barrier photocells positioned both before and after the bead cutting blade. In particular, the photocells downstream initiate the cutting cycle whereas those upstream serve not to enable movement of the blade if the pipe is too close to the cutting-off zone and therefore avoid impacts.

The safety photocells are necessary since the pipe is no longer on the cutting-off machine and, due to sliding/swaying of the pipe on the roller bed, it is no longer possible to know precisely the position of the various pipes present on said roller bed.

This solution currently has various drawbacks.

In the first place, the length of the exposed section of the continuous internal bead at the moment of cutting depends on the distance travelled by the cut pipe which is advancing on the roller bed and said distance, which cannot be controlled as the movement of the pipe on the roller bed cannot be controlled, may also be considerable. Consequently, cutting of the bead may produce very long overhanging bead ends, which could accidentally become trapped between the rollers of the roller bed, slow down the pipe to be offloaded, send false signals to the photocells, damage cables/pipes present on the machine and cause other related problems.

Furthermore, the photocell signals are not always reliable due to fumes, dirt, swaying movements of the pipe and other related causes. This may lead to non-functioning of the cutting blade or non-optimal or irregular functioning, and consequently non-separation of the bead.

The technical problems summarized above are solved by the machine described in patent EP2881214, in the name of the same applicant. The machine described in EP2881214 comprises a cutting-off device, interposed between the cutting unit which cuts the pipe, and the movement means which moves the cut pipe length away. The movement means grips the length of the pipe just cut by the cutting unit and accelerates it along the advancement direction, so as to distance the length from the remaining part of the pipe withheld by the clamps upstream of the cutting blades, thus exposing a section of the internal weld bead. The cutting-off device therefore performs the cutting of the internal weld bead floating inside the pipe.

While in the context of an extremely functional and effective machine, the cutting-off device described in EP2881214 can be improved in terms of the cutting precision on the bead and for the conservation of the cutting blades.

Therefore, the object of the present invention is to make available a cutting-off device for a weld bead that improves the characteristics of known cutting-off devices according to the prior art.

The technical characteristics of the invention, according to the aforementioned object, can be clearly seen from the contents of the claims set forth below, and the advantages thereof will more fully emerge from the detailed description which follows, made with reference to the accompanying drawings, which represent a purely exemplary and nonlimiting embodiment thereof, wherein:
- figures 1, 1a, 1b show isometric views of a cutting-off device according to the present invention, in three operating configurations;
- figures 1c, 1d, 1e show three alternative embodiments of a synchronizing device for controlling the cutting-off device;
- figures 2-6 illustrate a lateral view of the cutting-off machine according to the invention in accordance with a sequence of operating steps in succession.

Within the scope of the present invention the term "cutting-off " is intended as the complete separation of a length of continuous pipe or one much longer than said length. Said cutting-off is the sum of a first cutting operation, performed on the pipe to separate the pipe length, and a subsequent cutting operation of the floating internal bead (i.e. free as previously separated from the pipe by means of a special internal detaching tool) inside the pipe.

Furthermore, the invention is aimed at cutting pipes of any cross-section, obtained by means of welding a metal sheet along a longitudinal welding line, and operates preferably downstream of a removal unit of the internal welding bead.

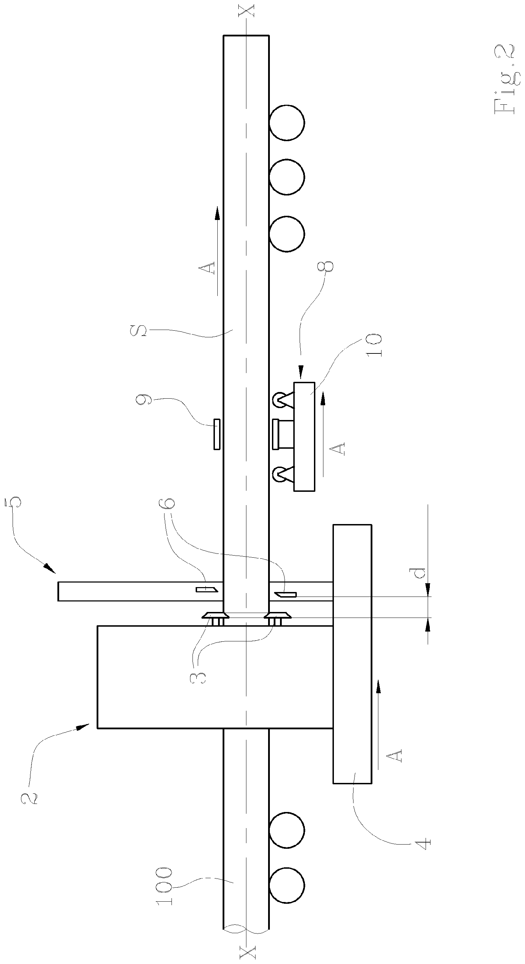

Figure 2 shows a cutting-off machine according to the present invention, which is adapted to operate the cut of a pipe 100 which is made to advance along its own longitudinal axis "X" according to an advancement direction "A", for example by means of a roller bed or other guide and support means adapted for the purpose. Preferably, the rollers rotate around respective horizontal axes and have a double-cone shape ("hour-glass" shape), with reduced central diameter to realize a support and stable guide of the pipe 100.

The cutting-off machine 1 comprises, in the first place, a cutting unit 2 adapted to receive a pipe 100 and to cut the pipe 100 on a transversal or perpendicular plane to the longitudinal axis "X" of the pipe 100, in particular on a vertical plane, in order to obtain a length "S" of pipe separate from the remaining part of the pipe 100.

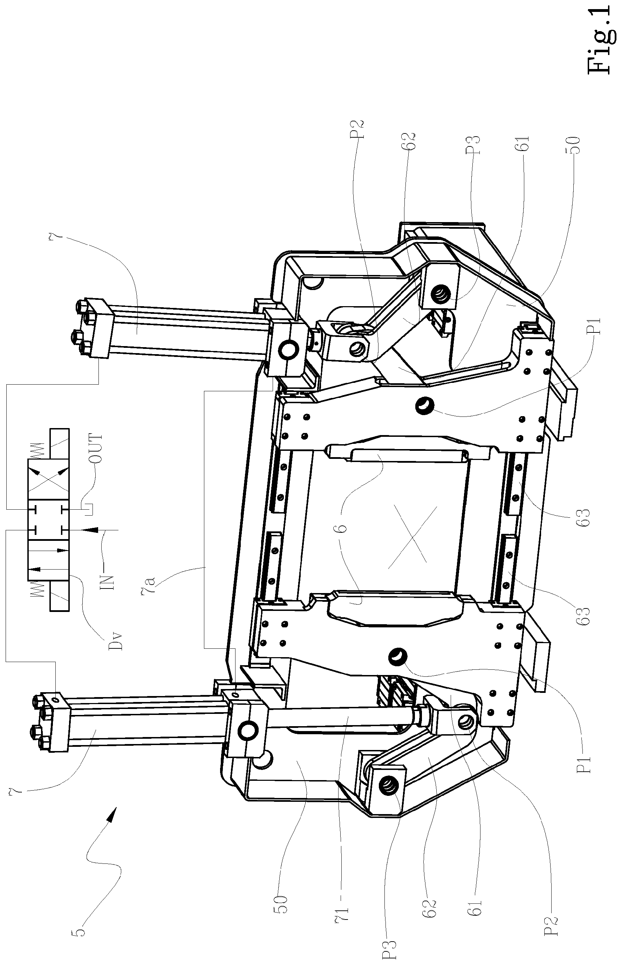

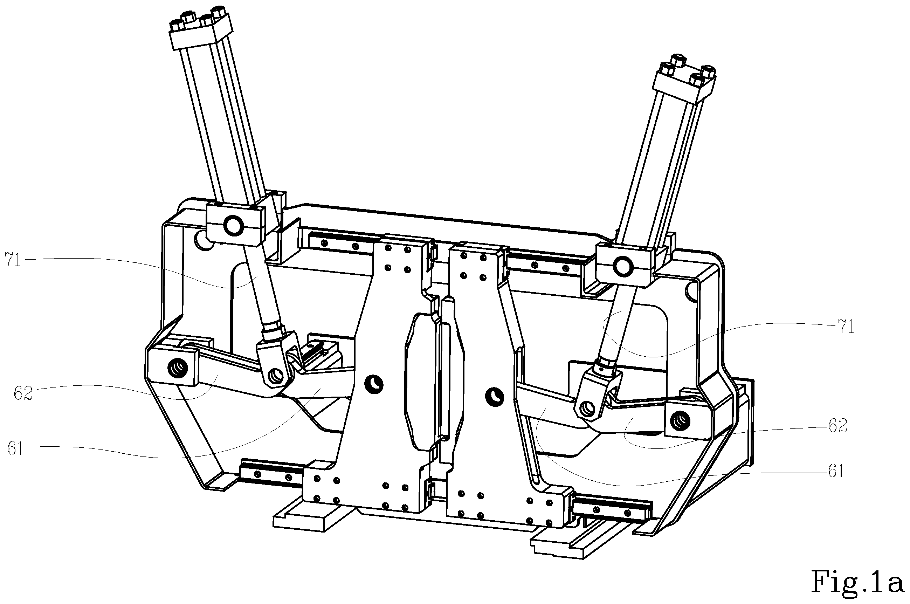

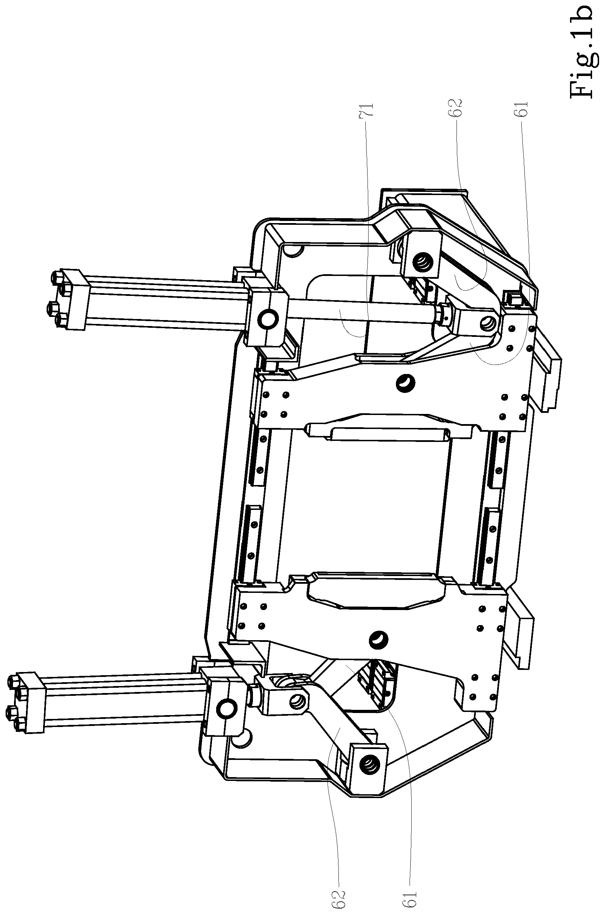

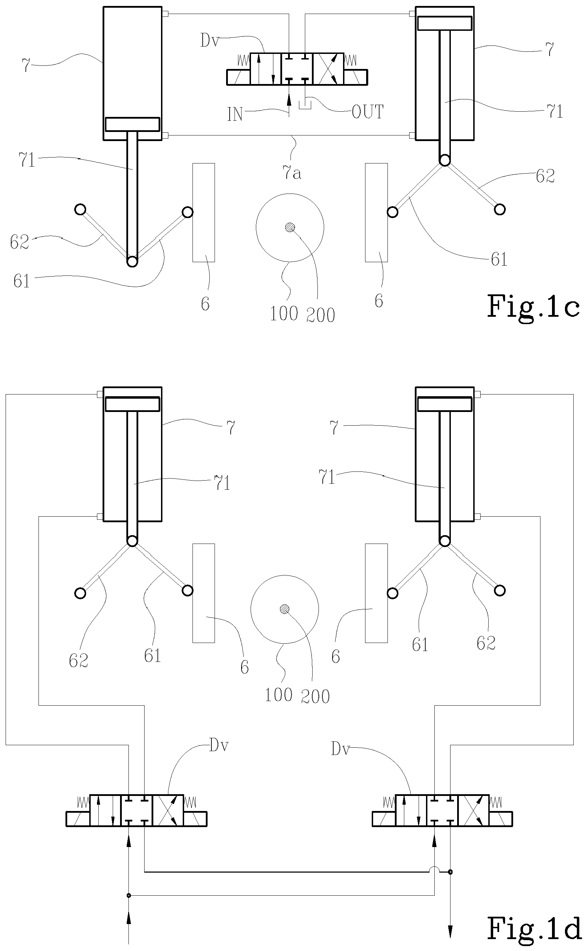

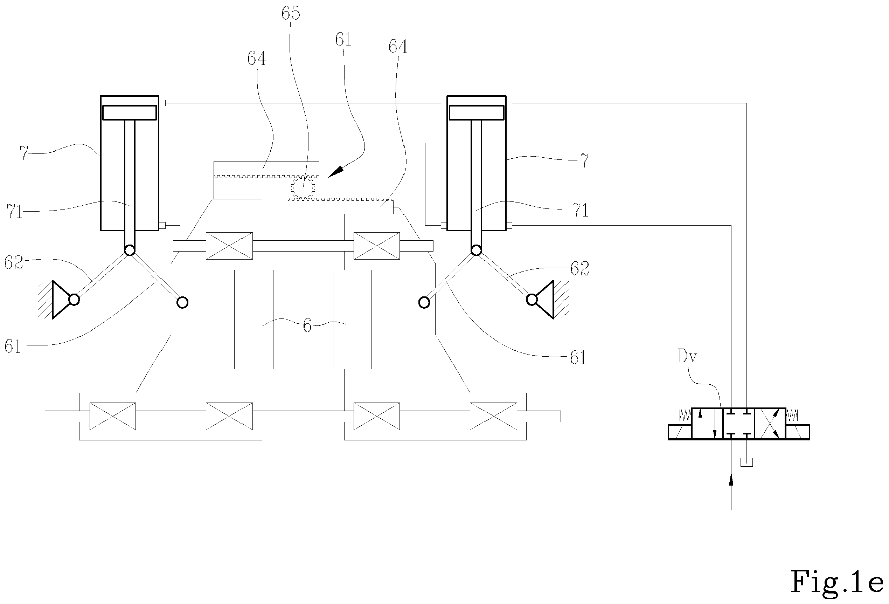

Preferably, the cutting unit 2 is the orbital cutting type, i.e. having at least one or more cutting tools (not shown as known in themselves) mobile along a circular trajectory or curve which extends around the longitudinal axis "X" of the pipe 100. Figures 1-5 show, in an entirely exemplary and diagrammatic way, two opposing tools 3 in the shape of circular blades, equipped with a rotary movement of revolution around the longitudinal axis "X" of the pipe 100 and approach and radial distancing with respect to the pipe 100. It is nonetheless possible to use other cutting tools, such as laser, water, plasma, etc., cutting heads.

Alternatively, it is possible to use other types of cutting unit 2, for example one or more linear advancement blades.

The cutting unit 2 cuts the pipe 100 along a cutting line resting on a vertical plane, preferably perpendicular, to the longitudinal axis "X" of the pipe 100. Said plane is preferably vertical.

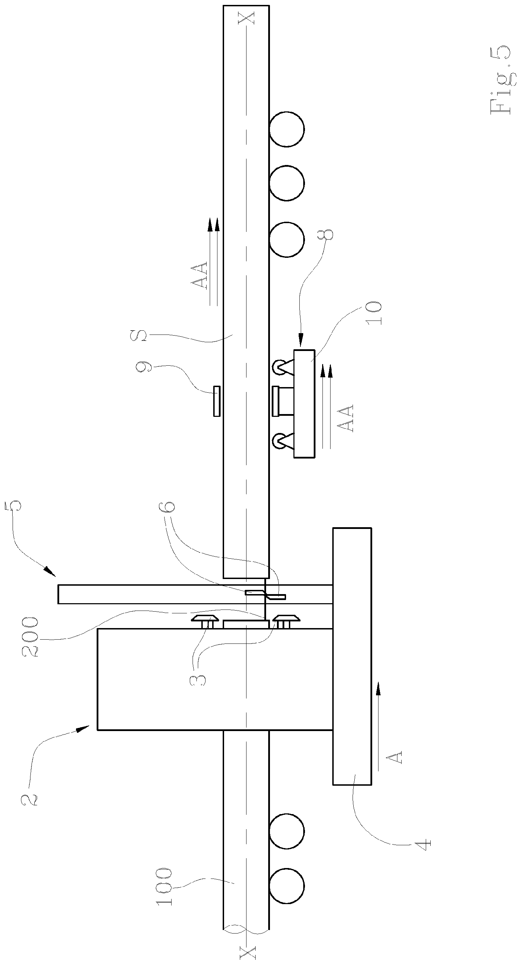

The cutting unit 2 is mobile along a parallel direction to the longitudinal axis "X" of the pipe 100 to operate with a technique of following the pipe 100. In other words, the cutting unit 2 is mobile in a sliding way (for example on a carriage 4 or another structure adapted to the purpose) parallel to the longitudinal axis "X" of the pipe 100 advancing parallel to said advancement direction "A" of the pipe 100 and backwards according to an opposite direction. Thus, the cutting unit 2 may move at the same advancement speed as the pipe 100 for a time at least sufficient to complete the cutting of the pipe 100 and, subsequently, may be brought backwards to operate a new cut on a subsequent part of the pipe 100. The above may be summarized by stating that the cutting unit 2 is mobile in a sliding way forwards and backwards between a first position, more upstream with respect to the advancement direction "A" and visible, for example, in figure 2, with which a starting position of cutting of the pipe 100 corresponds, and a second position, more downstream with respect to the advancement direction "A" and visible, for example, in figure 5, with which a completed cutting position of the pipe 100 corresponds. The necessary operations for realizing the complete cutting off of the pipe 100 shall be better illustrated below.

Immediately downstream of the cutting unit 2 a cutting-off device 5 is arranged, configured to cut the internal weld bead 200 floating inside the pipe 100 and which is partially exposed after one length "S" of pipe, separated from the remaining part of the pipe 100, is distanced from said remaining part of the pipe 100 by means of acceleration of the length "S".

The cutting-off device 5 comprises a pair of blades 6 mobile according to a respective transversal plane, preferably perpendicular, to the longitudinal axis "X" of the pipe 100 under the action of an actuator 7.

Preferably, each blade 6 acts on a respective vertical plane. The blades 6 are movable mutually towards and away from one another between a cutting position, in which they overlap at least in projection on a vertical plane, for interfering with the bead 200 and performing the cut, and an inactive position, in which they are spaced away from each other and enable the advancement of the bead 200 along the longitudinal axis "X".

Preferably, the blades 6 are movable on their own cutting plane along a horizontal direction. Each blade 6 is guided along such horizontal direction by means of sliding guides 63, e.g. of the prismatic or dovetail type. The sliding guides 63 are associated with the frame 50.

In the embodiment illustrated, which is preferred but not exclusive, the actuators 7 are in the form of hydraulic cylinders. Each actuator 7 is mounted oscillating on a frame 50 of the cutting-off device 5. In particular, the body of each actuator 7 is constrained to the frame 50 in an oscillating way about an axis of rotation parallel to the longitudinal axis "X".

Each blade 6 is connected to the respective actuator 7 by means of a toggle mechanism 61,62. Such toggle mechanism comprises a first rod 61 which, at one end P1, is pivoted to a respective blade 6. The toggle mechanism further comprises a second rod 62, which, at one end P3, is pivoted to the frame 50. The two rods 61,62 are also pivoted, at the other end P2, to the shaft 71 of the actuator 7, as shown in figure 1.

The sliding motion of the shaft 71 produces a rotation of the two rods 61,62 about the respective rotation pivots. In the configuration of the 7s in figure 1a, the two rods 61,62 are substantially aligned with each other, i.e. the rotation pivot P2 solidly constrained to the shaft 71 is aligned with the other two rotation pivots P1,P3. Such configuration defines a first end of the stroke performed by the blade 6, proximal or corresponding to the cutting position. Starting from this position, the movement of the shaft 71 in one direction or the other produces the distancing of the blade 6 from the first end of its stroke, i.e. it produces a distancing between the blades 6.

The stroke of the shaft 71 from the maximum shortening position towards the maximum extension position therefore produces a double stroke of the respective blade 6 towards the cutting and return position.

The cutting-off device 5 further comprises a synchronizer, provided to produce a synchronized movement of the blades 6. The synchronization mechanism is structured so that the blades 6 arrive simultaneously at the cutting position in a predefined position. This causes a clean and precise cut of the bead 200.

In a first possible embodiment, illustrated in figure 1c, the synchronizer comprises a supply and control circuit of the actuators 7. The double effect actuators 7 are connected to each other by means of a conduit 7a that connects the two shortening chambers of the shafts 71. A supply line IN can be connected, by means of a distributor Dv, to the extension chamber of the actuators 7. A discharge line OUT can be connected, by means of the same distributor Dv, to the extension chamber of the actuators 7. In particular, the distributor Dv is of the four-way and three-position type. In a central position, the distributor Dv closes both the supply line and the discharge line. In a first position, the distributor Dv connects the supply line with the extension line of an actuator 7, and the extension chamber of the other actuator 7 with the discharge line. In a second position, the distributor Dv inverts the connections of the first position.

By bringing the distributor Dv into the first or the second position, the operating fluid supplied through the supply line IN is sent to the extension chamber of an actuator 7, causing the extension of the shaft 71. The operating fluid present in the shortening chamber of the actuator 7, through the conduit 7a, is sent to the shortening chamber of the other actuator 7, causing the shortening of the corresponding shaft 71. The fluid present in the extension chamber of this actuator 7, through the distributor Dv, is supplied to the discharge line OUT. The supply and control circuit of figure 1c therefore produces an opposite movement of the two actuators 7. Given the configuration of the toggle mechanisms 61,62, which are the same as each other, the opposite strokes of the actuators 7 determine synchronized strokes of the blades 6 between the cutting and return positions.

In a second possible embodiment, illustrated in figure 1d, the synchronizer is realized in a supply and control circuit of the actuators 7. For that purpose, the double-effect actuators 7 are supplied by a circuit that comprises a double supply line IN and a double discharge line OUT. The supply and discharge lines are connected to a respective actuator 7 by means of a three-position distributor Dv of the known type, with a central closing position, a position for the stroke of the shaft 71 in one direction and a position for the stroke of the shaft 71 in the opposite direction. The two distributors Dv are activated in a synchronous way, to simultaneously assume the same operative position.

In a third possible embodiment, illustrated in figure 1e, the supply circuit of the two actuators 7 comprises a single supply line and a single discharge line. The two actuators 7 are connected to the supply and discharge line through a single distributor Dv. The blades 6 are connected to one another by a synchronization mechanism 6a, structured to force the blades 6 to perform the same stroke in opposite directions. In other words, the synchronization mechanism constrains the blades 6 to perform the same stroke towards or away from one another. In the embodiment shown, the synchronization mechanism comprises two racks 64 that are parallel and opposite to each other, each of which is solidly constrained to a respective blade 6, and an idler gear 65, which is interposed between the racks 64.

The cutting-off device 5 is also mobile along a parallel direction to the longitudinal axis "X" of the pipe 100 to operate with a technique of following on the pipe 100. In a like way to the cutting unit 2, the cutting-off device 5 is mobile in a sliding way parallel to the longitudinal axis "X" of the pipe 100 advancing parallel to said advancement direction "A" of the pipe 100 and backwards according to an opposite direction. Thus, the cutting-off device 5 may move at the same advancement speed as the pipe 100 for a time at least sufficient to complete cutting of the internal bead 200 and, subsequently, may be brought backwards to operate a new cut on a subsequent part of the internal bead 200. The above may be summarized by stating that the cutting-off device 2 is mobile in a sliding way forwards and backwards between a first position, more upstream with respect to the advancement direction "A" and visible, for example, in figure 2, with which a starting position of cutting of the pipe 100 corresponds, and a second position, more downstream with respect to the advancement direction "A" and visible, for example, in figure 5, with which a completed cutting position of the pipe 100 corresponds.

According to a preferred embodiment of the invention, the cutting unit 2 and the cutting-off device 5 are solidly joined in the forward/backward movement "A", along the longitudinal axis "X" of the pipe 100. For this purpose, the cutting unit 2 and the cutting-off device 5 may be arranged on the same carriage 4 which moves forwards and backwards along the longitudinal axis "X" of the pipe 100 between said first and second position.

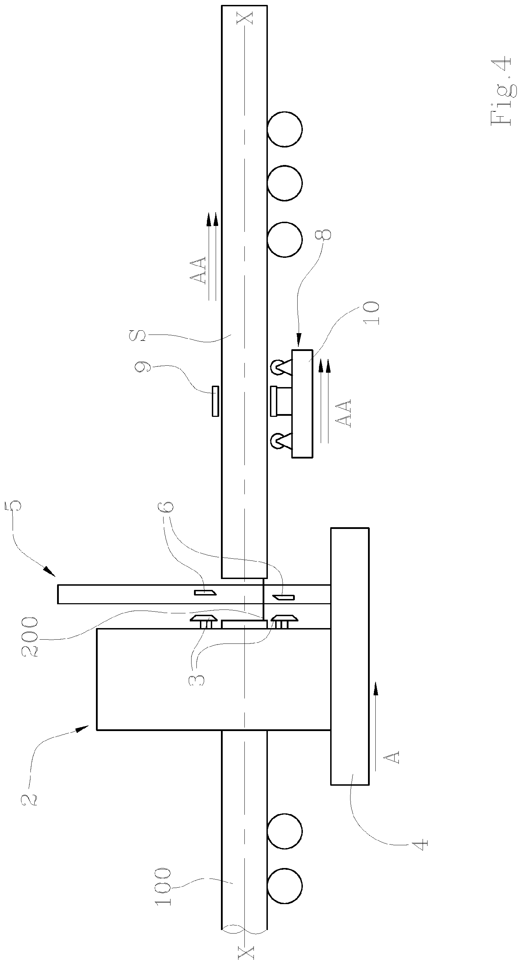

The cutting-off machine 1 further comprises movement means 8 adapted to grip stably a length "S" of pipe 100 previously cut and to distance the length "S" from the cutting unit 2 along an advancement direction "A" of the pipe 100. In other words, the movement means 8 grips the length "S" of the pipe 100 just cut by the cutting unit 2 and accelerates it along an advancement direction "A", so as to distance the length "S" from the remaining part of the pipe 100, thus exposing a section of the internal bead 200 (figure 4).

In the embodiment shown, the movement means 8 comprises a gripper 9, preferably a clamp, mounted sliding on a respective carriage 10 mobile forwards and backwards along the longitudinal axis "X" of the pipe 100. The movement means 8 could be realized in another way, provided it is adapted to the purpose of gripping the length "S" and distancing it from the remaining portion of the pipe 100 to expose a section of the inner bead 200. For example, the clamp 9 could be comprised of one or more pairs of pinch rolls, i.e. motorized rollers.

In the figures, the carriage 10 of the clamp 9 is illustrated independently from the carriage 4 of the cutting unit 2. In a possible embodiment, the carriage 10 of the clamp 2 can be mounted on board the carriage 4 of the cutting unit 2, and be sliding with respect to the latter along direction "A".

The movement means 8 is mobile in a sliding way forwards and backwards between a first position, more upstream with respect to the advancement direction "A" and visible, for example, in figure 2, with which a starting position of cutting of the pipe 100 corresponds, and a second position, more downstream with respect to the advancement direction "A" and visible, for example, in figure 4, with which a completed cutting position of the pipe 100 corresponds.

The distance between the end positions assumed by the movement means 8 is greater than the distance between the end positions reached by the cutting unit 2 and by the cutting-off device 5. In other words, the movement means 8 has a stroke, along the longitudinal axis "X" of the pipe, which is greater with respect to the cutting unit 2 and the cutting-off device 5.

Advantageously, the cutting-off device 5 is interposed between the cutting unit 2 and the movement means 8. Thus, the cutting-off device 5 is precisely at the section of the internal bead 200 exposed following the distancing action exerted by the movement means 8 on the length "S" just cut.

The cutting-off machine 1 further comprises a control unit (not shown) configured to manage operation of the different parts of the cutting-off machine 1.

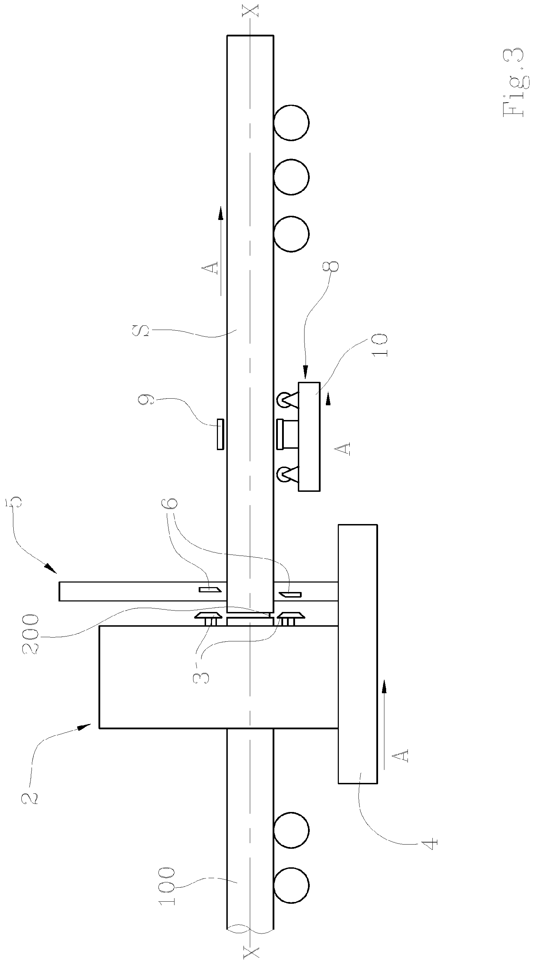

In particular, the control unit is configured to activate initially the cutting unit 2 on reaching a predetermined position of the pipe along the longitudinal axis "X". The cutting unit 2 is activated both by activating translation of the carriage 4 and by activating, immediately or subsequently, the cutting tools 3 (figure 3).

Furthermore, the control unit is configured to perform the following operations in succession, after completion of cutting of the length "S" by the cutting unit 2:
- activating movement means 8 to obtain stable gripping of the length "S" of the pipe 100;
- moving the movement means 8 by a pre-set travel away from the cutting unit 2 (achieving acceleration with respect to the speed of the cutting unit 2), and
- activating the cutting-off device 5 to cut the portion of the internal bead 200 exposed following distancing of the length "S".

Preferably, but not necessarily, the activation of the movement means 8 to stably grip the length "S" after completion of cutting of the length "S" by the cutting unit 2 may be substituted by activation of movement means 8 to stably grip a front portion of the pipe 100 before cutting of the length "S" by the cutting unit 2. In this circumstance, the movement means 8 grips the pipe 100 in its portion which will form the length "S" at the end of cutting and gripping remains stable until cutting of the internal bead 200.

In other words, rather than grip the length "S" of pipe after cutting, it is possible, by means of the movement means 8 (clamps), to grip the front part of the pipe 100 before cutting and, on completing cutting, maintain the length "S" of the pipe 100 gripped and advance it to distance it from the remaining part of the pipe 100.

Advantageously, the control unit sets an advancement of the movement means 8 for a sufficient stroke to allow a rear edge of the length "S" to overtake the cutting-off device 5 (and, in particular, to overtake the plane on which the blade 6 acts, which will therefore be positioned above the section of the internal bead 200 exposed). Subsequently to the moment when the rear edge of the length "S" of pipe overtakes the cutting-off device 5, the control unit maintains the movement means 8 at the same speed as the pipe 100 or may continue to distance the length "S".

Subsequently to cutting of the internal bead 200, the movement means 8 (or alternatively further means not shown) conducts the length "S" (having inside it a length of the internal bead 200) towards a receiving station which sorts the length "S" or alternatively submits the length "S" to further processing.

Functioning of the cutting-off machine 1 with reference to figures 1-6 is now described.

Figure 2 shows the machine 1 immediately before cutting starts, wherein the pipe 100 is inserted through the cutting unit 2, still inactive but already advancing in the same direction as the advancement direction "A" of the pipe 100 together with the cutting-off device 5, which is inactive. The movement means 8 also advances at the same speed as the pipe 100, but it is also inactive (the clamps or grippers do not grip the pipe 100). In this step, the cutting unit 2, the cutting-off device 5 and the movement means 8 move following the pipe 100 at the same speed as the pipe 100.

Figure 3 shows activation of the cutting tools 3 of the cutting unit, which realizes cutting of the pipe 100 and therefore separation of the length "S".

Figure 4 shows the subsequent step wherein, also with the system of following the pipe, the movement means 8 tightens the clamps or grippers on the length "S" and is accelerated (direction of movement indicated with "AA" to identify a greater speed with respect to the cutting unit 2 and the cutting-off device 5) to distance the length "S" from the remaining part of the pipe 100.

Figure 5 shows activation of the cutting-off device 5, which cuts the exposed section of the internal bead 200 between length "S" and the remaining part of the pipe 100, by means of guillotine descent of the blade 6.

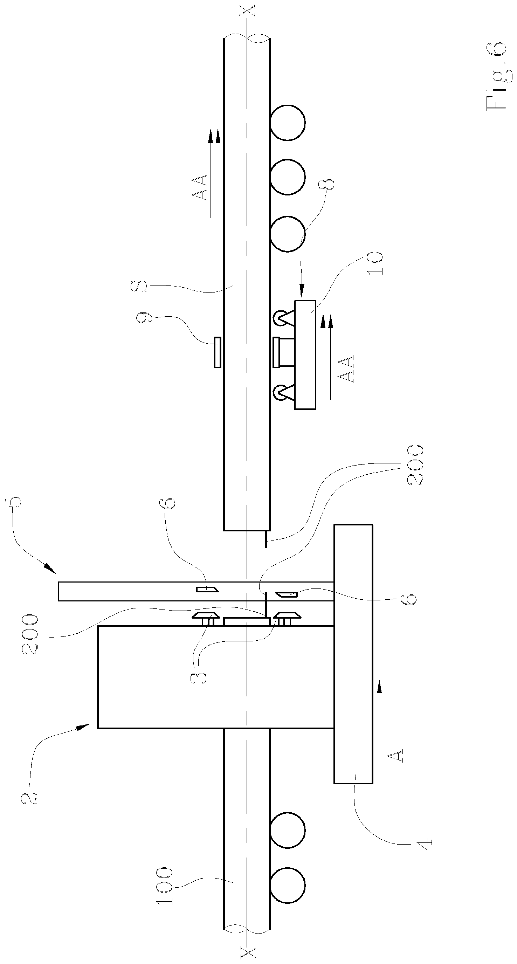

From the configuration shown in figure 6, a subsequent return step begins by the cutting unit 2, the cutting-off device 5 and the movement means 8 (whose grippers or clamps have released the grip on the length "S", which continues to advance on the roller bed), which return to the initial position of figure 2 to start a new work cycle.

The present invention achieves the proposed objects, overcoming the disadvantages complained of in the known art.

Configuration of the machine according to the invention allows, in fact, complete cutting of the pipe (cutting of the length and subsequent cutting of the internal bead) in absolute safety and precision, since the movement means determines, at every moment and in a controlled way (for example by means of an advancement curve imposed by the control unit), the position assumed by the length just cut. It is therefore possible to activate the cutting-off device on reaching an optimal configuration, particularly at the moment when the length has reached a safe distance from the pipe and from the cutting-off device.

Consequently, the massive use of photocells of the prior art, with the related problems of reliability, may be avoided, obtaining a structure of the cutting-off machine which is simple and reliable.

## Claims

1. A cutting-off device, **characterized in that** it comprises:
- a pair of blades (6) that are movable on a substantially vertical cutting plane between a cutting position, in which they partially overlap on a vertical plane in projection, and an inactive position, in which they are spaced away from each other;
- two actuators (7), each of which is associated with a blade (6);
- a synchronizer, adapted to produce a synchronized movement of the blades (6) such that the blades (6) reach the cutting position in a pre-established position at the same time.

2. The cutting-off device according to claim 1, wherein:
- the synchronizer is realized in a supply and control circuit for the actuators (7) which comprises a dual supply line and a dual discharge line - the supply and discharge lines are connected to a respective actuator (7) through a distributor (Dv) with three positions, of which a central operative position is a closing position, a first operative position is for the stroke of the shaft (71) in one direction and a second operative position is for the stroke of the shaft (71) in the opposite direction.
the two distributors (Dv) are actuated in synchrony, so as to take on the same operative position at the same time.

3. The cutting-off device according to claim 1, wherein:
- the synchronizer is realized in a supply and control circuit for the actuators (7) which comprises a single supply line and a single discharge line;
- the two actuators (7) are connected to the supply and discharge lines through a single distributor (Dv);
- the blades (6) are interconnected by a synchronization mechanism structured so as to force the blades (6) to complete the same stroke in opposite directions.

4. The cutting-off device according to claim 3, wherein the synchronization mechanism comprises two racks (64) that are parallel and opposite to each other, each of which is solidly constrained to a respective blade (6), and an idler gear (65), which is interposed between the racks (64) and meshes with both.

5. The cutting-off device according to one of the preceding claims, wherein:
- each blade (6) is connected to the respective actuator (7) by means of a toggle mechanism (61, 62);
- the toggle mechanism comprises a first rod (61) which, at one end (P1), is pivoted to a respective blade (6), and a second rod (62), which, at one end (P3), is pivoted to a frame (50);
- the two rods (61, 62) are pivoted, at the other end (P2) to a shaft (71) of the actuator (7).

6. A cutting machine, comprising:
- a cutting unit (2) provided to receive a pipe (100) and to cut the pipe (100) along a plane transverse to a longitudinal axis (X) of the pipe (100);
- movement means (8) provided to stably grip a cut length (S) of pipe (100) and to move said length (S) away from the cutting unit (2) along an advancement direction (A) of the pipe (100);
- a cutting-off device (5) interposed between said cutting unit (2) and said movement means (8) and configured to cut off an internal weld bead (200) floating inside said pipe (100).

7. The machine according to claim 1, wherein said cutting-off device (5) and said cutting unit (2) act along respective planes transverse to the longitudinal axis (X) of the pipe (100).

8. The machine according to claim 1 or 2, further comprising a control unit configured to perform the following operations in succession:
- activating said movement means (8) so as to achieve stable gripping of a length (S) of pipe (100) cut from a continuous pipe (100) by means of said cutting unit (2);
- moving said movement means (8) by a pre-established length of stroke away from the cutting unit (2) to move the length (S) of pipe away from the remaining part of the pipe (100), and
- activating said cutting-off device (5) so as to cut off an internal weld bead (200) present inside said length (S) of pipe and said remaining part of the pipe (100) in an area comprised between said length (S) of pipe and said remaining part of the pipe (100).

9. The machine according to any one of the preceding claims, wherein said movement means (8) comprises a gripper or clamp slidably mounted on a carriage (4) that is moveable forwards and backwards along the longitudinal axis (X) of the pipe (100).

10. The machine according to any one of the preceding claims, wherein said cutting-off device (5) is moveable along a direction parallel to the longitudinal axis (X) of the pipe (100) so as to operate with a tracking technique on the pipe (100).

11. The machine according to claim 6, wherein said cutting unit (2) is also movable along a direction parallel to the longitudinal axis (X) of the pipe (100) so as to operate with a tracking technique on the pipe (100), and wherein the cutting unit (2) and the cutting-off device (5) are solidly constrained to each other during movement along said direction parallel to the longitudinal axis (X) of the pipe (100).

12. The machine according to any one of the preceding claims, wherein said cutting unit (2) is of the orbital type having at least one cutting tool (3) that is moveable along a path that extends around the longitudinal axis (X) of the pipe (100).
